# EUROPÄISCHE PATENTSCHRIFT

(11) **EP 2 638 474 B1**
(45) Veröffentlichungstag und Bekanntmachung des Hinweises auf die Patenterteilung: **07.10.2015**
(21) Anmeldenummer: 11776772.3
(22) Anmeldetag: 27.10.2011
(51) Int. Cl.: G06F 13/40

(54) **VERFAHREN ZUM ANPASSEN DER SIGNALÜBERTRAGUNG ZWISCHEN ZWEI ELEKTRONISCHEN GERÄTEN SOWIE ANORDNUNG MIT EINEM COMPUTERSYSTEM UND EINEM PERIPHERIEGERÄT**
METHOD FOR MATCHING THE SIGNAL TRANSMISSION BETWEEN TWO ELECTRONIC APPLIANCES, AND ARRANGEMENT HAVING A COMPUTER SYSTEM AND A PERIPHERAL DEVICE
PROCÉDÉ D'ADAPTATION DE LA TRANSMISSION DU SIGNAL ENTRE DEUX APPAREILS ÉLECTRONIQUES AINSI QU'AGENCEMENT COMPRENANT UN SYSTÈME INFORMATIQUE ET UN APPAREIL PÉRIPHÉRIQUE

(30) Priorität: 08.11.2010 DE 102010050719
(43) Veröffentlichungstag der Anmeldung: 18.09.2013
(73) Patentinhaber: Fujitsu Technology Solutions Intellectual Property GmbH, 80807 München (DE)
(72) Erfinder: DEPTA, Robert, 86179 Augsburg (DE)
(74) Vertreter: Epping - Hermann - Fischer
(86) Internationale Anmeldenummer: PCT/EP2011/068893
(87) Internationale Veröffentlichungsnummer: WO 2012/062598

(56) Entgegenhaltungen:
- WO-A1-2008/138926
- US-A1- 2006 181 303
- US-A1- 2010 208 780
- US-B1- 7 453 896

## Beschreibung

Die Erfindung betrifft ein Verfahren zum Anpassen der Signalübertragung zwischen zwei elektronischen Geräten, welche über eine physikalische Schnittstelle miteinander verbunden sind und jeweils einen Sender und einen Empfänger aufweisen, wobei Signale vom Sender eines Gerätes entlang einer Übertragungsstrecke an den Empfänger des anderen Gerätes übertragen werden und wobei die Übertragungsstrecke zumindest zwei Signalleitungen zur differentiellen Übertragung der Signale aufweist.

Ferner betrifft die Erfindung eine Anordnung mit einem Computersystem und einem Peripheriegerät, wobei das Peripheriegerät über eine physikalische Schnittstelle an das Computersystem angeschlossen ist und wobei das Computersystem und das Peripheriegerät jeweils einen Sender und einen Empfänger zur Signalübertragung zwischen dem Computersystem und dem Peripheriegerät aufweisen.

In Computersystemen werden zwei Komponenten oder Geräte, beispielsweise ein Motherboard und eine interne Festplatte oder ein externes Peripheriegerät, über physikalische Schnittstellen miteinander verbunden, um Daten untereinander austauschen zu können. Gängige Schnittstellen sind beispielsweise der Universal Serial Bus (USB), das Small Computer System Interface (SCSI), das Serial Attached SCSI (SAS), das Serial Advanced Technology Attachement (SATA) oder der Fibre Channel (FC). Die Übertragungseigenschaften, wie beispielsweise die Übertragungsgeschwindigkeit, Form und Inhalt einzelner Datenpakete oder die Adressierung und Kommunikation verbundener Geräte untereinander werden bei jeder Schnittstelle in einem zugehörigen Übertragungsprotokoll festgelegt.

Eine physikalische Schnittstelle besteht aus Kabeln, elektrischen Leitern und Steckverbindungen zwischen den einzelnen Geräten. Die Daten und Informationen werden zwischen den Geräten über analoge Signale übertragen. Eine Signalübertragung auf der Übertragungsstrecke der Schnittstelle erfolgt in der Regel auf zwei differentiellen Signalleitungen. Ein analoges Signal wird auf einer Leitung ("+") unverändert und auf der anderen Leitung ("-") invertiert übertragen. Die beiden Leitungen + und - bilden schließlich eine Übertragungsstrecke. Die Signale werden beispielsweise in ihrer Amplitude moduliert, um digitale Informationen einzelner Bits zu kodieren. So entspricht zum Beispiel bei der Leitung + ein Low-Pegel der Spannung dem logischen Wert "0" und ein High-Pegel der Spannung dem logischen Wert "1". Aufgrund der Inversion der Leitung - ergibt sich bei der Leitung - der umgekehrte Fall.

Eine differentielle Übertragung einer Information über Signale auf den Leitungen + und - hat den Vorteil, dass ein Differenzsignal gemäß "+" - "-" beider Signale gebildet werden kann. Der Spannungsunterschied zwischen Low-Pegel und High-Pegel des gebildeten Differenzsignals ist dadurch doppelt so groß. Eingestrahlte Störungen können weitgehend eliminiert werden, wodurch die Übertragungssicherheit erhöht werden kann.

Jedes Gerät besitzt einen Sender sowie einen Empfänger, welche analoge Signale protokollgerecht über die Schnittstelle senden beziehungsweise empfangen. Die Sender und Empfänger sind dabei spezielle Schaltkreise oder integrierte Bausteine (ICs), wobei in einem Gerät der Sender und der Empfänger oftmals gemeinsam als so genannter Transceiver (Transmitter = Sender und Receiver = Empfänger) beschrieben werden. Die einzelnen Schaltkreise der Sender und Empfänger werden auch als Transmitter-PHY oder Receiver-PHY in Anlehnung an ihre Aufgabe der physikalischen Signalübertragung bezeichnet.

Eine physikalische Schnittstelle mit ihrer Übertragungsstrecke aus Steckern, Leitungen und Leiterbahnen auf Platinen beeinflusst die Signalübertragung zwischen einem Sender und einem Empfänger zweier Geräte. Denn die Übertragungsstrecke ist real und damit nicht ideal und weist negative Eigenschaften auf. Aufgrund von hochfrequenter Streuung, elektromagnetischer Interferenz, Übersprechen (Crosstalk) oder Reflexion - um nur einige negative Eigenschaften zu nennen - werden gesendete Signale während der Übertragung auf der physikalischen Schnittstelle verändert und gestört. So treten beispielsweise Schwankungen der Amplitude, der Phase (Phasenrauschen oder englisch: Jitter), der Frequenz, der Flankensteilheit oder eine Kombination dieser Effekte bei den übertragenen Signalen auf.

Insbesondere kann es zu einer Unausgeglichenheit bzw. Asymmetrie zwischen den einzelnen Signalen der Leitungen + und - kommen, wenn die Übertragungsstrecke Asymmetrien zwischen den beiden Leitungen + und - aufweist oder negative Effekte asymmetrisch in den Leitungen + und - auftreten. Die Signale können somit auch bezüglich der Amplitude, der Phase, der Frequenz, der Flankensteilheit oder einer Kombination dieser Effekte asymmetrisch sein. Dies kann zu einer Verschlechterung der Signalqualität der Empfangssignale (Verkleinerung der horizontalen sowie vertikalen Augenöffnung in einem Augendiagramm), einer erhöhten Bitfehlerrate (englisch: Bit error rate = BER) oder im schlimmsten Fall zu Informationsverlust führen.

In der Regel werden Eigenschaften der übertragenen Sendesignale gemäß dem verwendeten Übertragungsprotokoll einmalig festgelegt und nicht mehr geändert. Daher erfolgt lediglich eine Anpassung der Parameter eines Empfängers an die Spezifikationsanforderungen gemäß dem vorgegebenen Übertragungsprotokoll. Angepasste Parameter werden beispielsweise in Kontrollregistern im Empfänger abgelegt. Eine Anpassung kann beispielsweise bei der SAS-Technologie während der sogenannten "Speed Negotiation Phase" (Phase, in welcher die Übertragungsgeschwindigkeit bestimmt wird) während einer Trainingsphase durchgeführt werden. Diese empfängerseitige Anpassung trägt jedoch nur gering zu einer Verbesserung der Übertragungseigenschaften bei.

Die Druckschrift US 2010/0208780 A1 zeigt ein Signalübertragungssystem, wobei Daten differentiell von einem Sender an einen Empfänger übertragen werden. Im Empfänger wird aus dem differentiellen Signal ein Gleichanteil ermittelt und mit einem Referenzwert verglichen. Daraus wird schließlich ein Feedback-Signal gebildet, welches an den Sender rückübermittelt wird zur Anpassung von Parametern im Sender. Diese Lösung erlaubt lediglich eine begrenzte Anpassung des Senders an Störeffekte innerhalb der Übertragungsstrecke.

Daher ist es Aufgabe der Erfindung, ein Verfahren sowie eine Anordnung der eingangs genannten Art zu beschreiben, welche ein verbessertes Anpassen der Signalübertragung zwischen zwei elektronischen Geräten ermöglichen.

In einem ersten Aspekt wird die Aufgabe durch ein Verfahren der vorgenannten Art gelöst, welches die folgenden Schritte umfasst:
A) Erfassen von Signalwerten am Empfänger des ersten Gerätes jeweils separat für beide Signalleitungen,
B) Auswerten einer Asymmetrie zwischen den Signalen beider Signalleitungen am Empfänger des ersten Gerätes in Abhängigkeit von den erfassten Signalwerten,
C) Ändern eines oder mehrerer Parameter des Senders im zweiten Gerät seperat und individuell bezogen auf die einzelnen Signalleitungen,
wobei zumindest die Schritte A) und C) iterativ durchgeführt werden bis ein vorbestimmtes Abbruchkriterium erfüllt ist. Ein derartiges Verfahren berücksichtigt ein Ungleichgewicht, eine Unausgeglichenheit oder Asymmetrie zwischen den beiden Signalleitungen. Durch Messungen an beiden Signalleitungen werden empfängerseitige Asymmetrien zwischen den Signalen beider Signalleitungen, welche zu Störungen führen können, erfasst und ausgewertet. Als Reaktion darauf können senderseitig Parameter separat und individuell bezogen auf die einzelnen Signalleitungen geändert werden.

Somit kann durch das Verfahren nicht nur eine generelle Störung einer Übertragungsstrecke als solche, sondern vielmehr ein Ungleichgewicht zwischen den Signalen der beiden Signalleitungen der differentiellen Übertragungsstrecke erfasst und in der Auslegung der Eigenschaften des Senders berücksichtigt werden. Dies hat den Vorteil, dass neben den Empfangseigenschaften eines Empfängers auch die Sendeeigenschaften eines Senders derart angepasst werden können, dass Signalübertragung und -qualität verbessert werden können.

Ein Vorteil des Verfahrens ist, dass ein Erfassen von Signalwerten am Empfänger des ersten Gerätes jeweils separat für beide Signalleitungen und ein Ändern eines oder mehrerer Parameter des Senders im zweiten Gerät für zumindest eine der beiden Signalleitungen iterativ durchgeführt werden können. Somit kann ein Datensatz mit zahlreichen Messungen der Signalwerte der einzelnen Signalleitungen am Empfänger des ersten Gerätes in Abhängigkeit bestimmter Parameterwerte des Senders im zweiten Gerät generiert werden. Ein definiertes Abbruchkriterium kann beispielsweise eine vorbestimmte Menge an Signalwerten, also eine bestimmte Größe eines Ergebnisraumes sein.

Aus dem auf diese Weise gewonnen Roh-Datensatz kann dann empirisch oder beispielsweise durch Maximum/Minimum-Berechnung, Mittelung oder durch Optimierungsalgorithmen das Optimum der einzustellenden Parameterwerte am Sender des zweiten Gerätes ermittelt werden.

Es ist auch denkbar, alle drei Verfahrensschritte A), B) und C) iterativ durchzuführen bis ein Abbruchkriterium erfüllt ist. So würde jedes Mal nach einer Messung der Signalwerte beider Signalleitungen am Empfänger des ersten Gerätes eine Unausgeglichenheit der Signale ausgewertet werden und anschließend die Parameter im Sender des zweiten Gerätes geändert werden. Dies erlaubt schrittweise eine Annäherung an ein Optimum. Ein Abbruchkriterium wäre beispielsweise das Erreichen einer vorbestimmten engen Umgebung um das Optimum herum. Der Vorteil dabei ist, dass die Kompensation der Unausgeglichenheit mit jeder Iteration verbessert werden kann, sodass unter Umständen weniger Messungen oder Schritte notwendig sind, als bei dem oben genannten Vorgehen der Generierung eines empirischen Datensatzes.

Die erfassten Signalwerte können, als Roh-Datensatz oder als verarbeitete Daten, an das zweite Gerät übermittelt werden, wobei die Unausgeglichenheit im zweiten Gerät ausgewertet wird. Alternativ wird zunächst die Unausgeglichenheit anhand der gemessenen Signalwerte im Empfänger des ersten Gerätes ausgewertet, wobei das Ergebnis dieser Auswertung anschließend an das zweite Gerät übermittelt wird.

Bevorzugt werden die Parameter des Senders im zweiten Gerät derart angepasst, dass Eigenschaften der Signale zumindest einer der beiden Signalleitungen durch den Sender im zweiten Gerät verändert werden, sodass die Unausgeglichenheit zwischen den Signalen beider Signalleitungen am Empfänger reduziert werden kann. Das bedeutet, dass beispielsweise Sendesignale nur einer Signalleitung oder beider Signalleitungen im Sender vor der Übertragung bewusst mit Asymmetrien versehen und beaufschlagt werden können, sodass nach der Übertragung am Empfänger nahezu symmetrische Signale beider Signalleitungen vorliegen und ein bestmögliches Empfangssignal als Differenzsignal der Signale beider Signalleitungen gebildet werden kann.

Somit kann einer empfängerseitig erfassten Unausgeglichenheit der beiden Signalleitungen aufgrund von asymmetrischen Störungen in der Übertragungsstrecke durch ein bewusstes und gewolltes Beaufschlagen der Sendesignale im Sender mit gegenteilig wirkenden Asymmetrien begegnet werden, sodass letztlich die negativ wirkenden Asymmetrien der Übertragungsstrecke kompensiert werden können. Die Eigenschaften eines Empfangssignals werden dadurch verbessert, insbesondere im Bereich des Übersprechens (Crosstalk) und der horizontalen sowie vertikalen Augenöffnung. Als gewünschter Nebeneffekt kann auch eine Verbesserung der elektromagnetischen Verträglichkeit (EMV) des Gesamtsystems auftreten.

Die Eigenschaften der Signale, welche senderseitig verändert werden, umfassen vorteilhaft zumindest die Signalamplitude, Flankensteilheit, Präemphase, Phasenverschiebung und den Auslösezeitpunkt. Unter dem Auslösezeitpunkt soll hier eine bewusste Zeitverzögerung eines differentiellen Signalanteils einer der beiden Signalleitungen verstanden werden, sodass durch zeitversetztes Übertragen der Signale auf beiden Signalleitungen einer in der Übertragungsstrecke auftretenden Zeitverschiebung der Signale entgegengewirkt werden kann. Die Phasenverschiebung und der Auslösezeitpunkt sind eng miteinander in Beziehung stehende Signaleigenschaften. Das bedeutet, eine Zeitverschiebung kann gleichzeitig mit einem Phasenversatz der Signale einhergehen. Umgekehrt können beide Signale mit einem Phasenversatz versehen, aber gleichzeitig versendet werden.

Durch Veränderungen der Signalamplitude und/oder der Flankensteilheit zumindest eines Signals einer Signalleitung kann insbesondere einer asymmetrischen Dämpfung oder Verlustleistung in der Übertragungsstrecke begegnet werden. Veränderungen der Präemphase und/oder Deemphase zumindest eines Signals einer Signalleitung wirken insbesondere einer asymmetrischen Dämpfung oder Akzentuierung bestimmter Frequenzanteile in der Übertragungsstrecke entgegen.

Parameter im Sender, welche verändert werden können, sind beispielsweise der Verstärkungsfaktor eines Sendeverstärkers (Power Amplifier) oder Kennwerte von Impedanzelementen, insbesondere Kapazitäten und Induktivitäten, welche beispielsweise zum Einstellen bestimmter Frequenzen oder zum Einstellen der Flankensteilheit eines Signals dienen.

Bevorzugt wird das vorgenannte Verfahren für beide Geräte durchgeführt. Das bedeutet, dass nicht nur der Sender des zweiten Gerätes anhand einer Erfassung der Unausgeglichenheit der Übertragungsstrecke der physikalischen Schnittstelle angepasst werden kann, sondern auch der Sender des ersten Gerätes. Somit werden die Parameter beider Sender zur Signalübertragung entlang der Schnittstelle optimal angepasst.

Je nach Konfiguration besitzt die physikalische Schnittstelle Leitungen zur bidirektionalen Signalübertragung oder unidirektionale Übertragungswege. Im ersten Fall werden die Signale in Form von Spannungspegeln über differentielle Signalleitungen in beiden Richtungen vom Sender eines Gerätes an den Empfänger des anderen Gerätes übertragen. Im zweiten Fall dienen differentielle Signalleitungen lediglich der Signalübertragung in eine Richtung vom Sender eines Gerätes an den Empfänger des anderen Gerätes. Aufgrund der Durchführung des Verfahrens für beide Geräte können demnach beide Sender an die jeweiligen Übertragungskonfigurationen der physikalischen Schnittstelle optimal angepasst werden.

Vorzugsweise wird das Verfahren nach jeder Änderung der Übertragungsstrecke der physikalischen Schnittstelle oder zu vorbestimmten Zeitpunkten, gegebenenfalls periodisch, zum Beispiel in vorbestimmten Trainings- oder Abstimmungsphasen oder beim Hochfahren des Gesamtsystems durchgeführt. Das bedeutet, dass die Sender der beiden Geräte jedes Mal neu parametrisiert werden können, falls sich Asymmetrien in der Übertragungsstrecke der physikalischen Schnittstelle ändern können. Dies ist beispielsweise der Fall, wenn Kabel oder Stecker mit anderen Hochfrequenzeigenschaften verwendet werden. Eine vorbestimmte Trainings- oder Abstimmungsphase könnte zum Beispiel eine protokollgerechte Geschwindigkeitsanpassung zwischen den beiden Geräten sein.

Die Übermittlung der Daten und/oder Ergebnisse an das zweite Gerät wird vorzugsweise über eine von den Signalleitungen separate weitere Datenleitung (sogenanntes Out-Band Interface) durchgeführt. Dies hat den Vorteil, dass eine Übermittlung zeitgleich zur Auswertung durchgeführt werden kann, ohne die eigentliche Übertragungsstrecke zu belasten und eine empfängerseitige Auswertung der Signalwerte zu erschweren.

Die Messung der Signalwerte der Signale beider Signalleitungen kann empfängerseitig mittels externen Messgeräten, beispielsweise mittels eines Oszilloskopes durchgeführt werden. Es können beispielsweise Gleichtakt-Störungen, Phasenrauschen oder horizontale sowie vertikale Augenöffnungen gemessen werden.

Es ist jedoch auch denkbar, Signalwerte automatisiert direkt am Abtastpunkt (sampling point) der übertragenen Signale im Analog-Digital-Wandler des Empfängers abzugreifen. Eine weitere Möglichkeit besteht darin, Signalwerte innerhalb des sogenannten "Unit Intervalls" (UI), also des Zeitintervalls eines übertragenen Symbols zu erfassen.

Anstatt der direkten Auswertung eines differentiellen Signals gemäß der Berechnung "+" - "-" (Erläuterungen siehe oben) kann auch eine Erfassung der Unausgewogenheit beispielsweise gemäß der Berechnung ["+" + "-"]/2 erfolgen. Weitere Berechnungen, gegebenenfalls mit speziellen Gewichtungen einzelner Aspekte einer Asymmetrie der differentiellen Übertragungsstrecke sind denkbar.

Vorteilhaft werden bestimmte Signalmuster, gegebenenfalls für verschiedene Übertragungsgeschwindigkeiten unterschiedlich ausgestaltet, eingesetzt, welche in einem Test- oder Abstimmungsprozess vom Sender des einen Gerätes an den Empfänger des anderen Gerätes übermittelt werden. Diese Signalmuster können dann am Empfänger ausgewertet werden. Der Vorteil vorbestimmter Signalmuster liegt darin, dass verschiedenste Szenarien durchgeprüft werden können. Ferner ist es möglich, durch Vergleich der gemessenen Signalwerte mit den vorbestimmten Signalmustern einfach auf Störungen und Asymmetrien in der Übertragungsstrecke schließen zu können.

In einem zweiten Aspekt wird die Aufgabe durch eine Anordnung mit einem Computersystem und einem Peripheriegerät der eingangs genannten Art gelöst, wobei die Anordnung dazu eingerichtet ist, ein Verfahren der vorgenannten Art und Weise durchzuführen. Das Peripheriegerät ist beispielsweise eine Festplatte.

Weitere vorteilhafte Ausgestaltungen sind in den Unteransprüchen sowie in der Figurenbeschreibung offenbart.

Die Erfindung wird nachfolgend anhand mehrerer Zeichnungen näher erläutert. Es zeigen:
- Figur 1: eine schematisierte Darstellung einer Anordnung eines Computersystems mit einem Peripheriegerät und
- Figur 2: eine schematisierte Darstellung von Einzelkomponenten zur Anpassung der Parameter eines Senders.

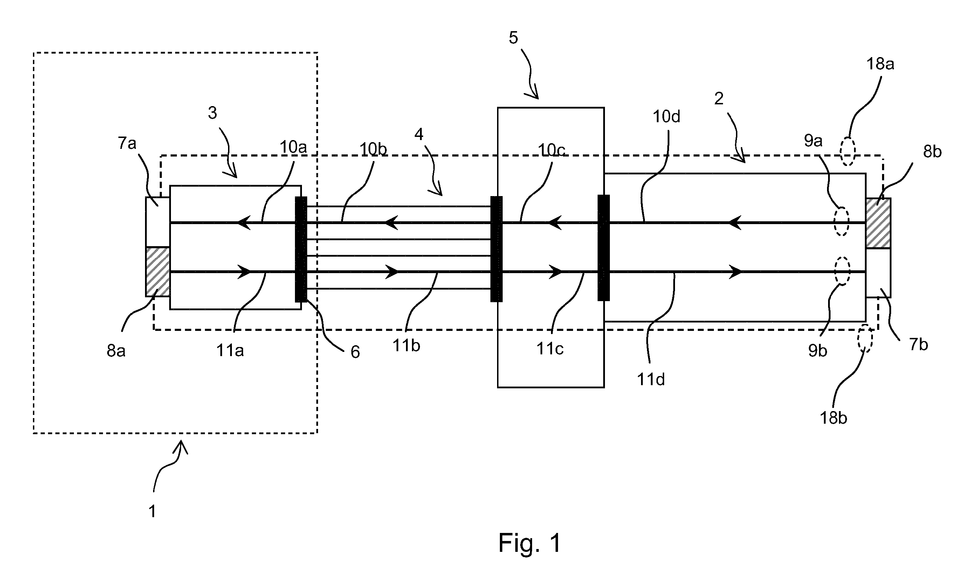

Figur 1 zeigt eine schematisierte Darstellung einer Anordnung eines Computersystems 1 mit einem Peripheriegerät 2. Die beiden Geräte 1 und 2 sind über eine physikalische Schnittstelle zum Datenaustausch miteinander verbunden. Die physikalische Schnittstelle besteht dabei aus Kabeln 4 und einer Backplane 5, welche über Stecker 6 sowohl miteinander als auch mit einem Host-Bus-Adapter 3 im Computersystem 1 und mit dem Peripheriegerät 2 verbunden sind. Der Host-Bus-Adapter 3 dient der Aufbereitung von peripheren Bussignalen der physikalischen Schnittstelle und zur Übertragung dieser Signale an einen systeminternen Host-Bus oder Systembus (nicht dargestellt), zum Beispiel einen PCI-Bus (PCI = peripheral component interconnect), welcher auf einer Hauptplatine des Computersystems 1 integriert ist. Das Peripheriegerät 2 kann beispielsweise eine interne Festplatte sein, welche über die Backplane 5, die Kabel 4 sowie den Host-Bus-Adapter 3 mit der Hauptplatine des Computersystems 1 zum Datenaustausch verbunden ist. Es ist jedoch auch denkbar, dass das Peripheriegerät ein externes Gerät, beispielsweise eine externe Festplatte, ein Drucker oder ein Personal Digital Assistant (PDA) ist.

Zur Datenübertragung sind zwei unidirektionale Übertragungsstrecken 9a und 9b zwischen dem Host-Bus-Adapter 3 des Computersystems 1 und dem Peripheriegerät 2 eingerichtet. Die physikalische Schnittstelle entspricht beispielsweise dem SAS-, SATA-, FC- oder USB-Standard. So umfassen die Übertragungsstrecken 9a und 9b jeweils zwei Signalleitungen (nicht explizit dargestellt), die eine differentielle Signalübertragung ermöglichen. Auf der einen Signalleitung, beispielsweise mit "+" gekennzeichnet, liegt dabei ein Spannungssignal zur Kodierung der Daten. Auf der anderen Leitung, beispielsweise mit "-" gekennzeichnet, liegt das invertierte Spannungssignal. Ein Empfänger kann eine Differenzspannung aus den Signalen auf den beiden Signalleitungen + und - bilden und erhält somit ein robustes und fehlerfreies sowie rauscharmes Empfangssignal.

Ferner weisen der Host-Bus-Adapter 3 sowie das Peripheriegerät 2 jeweils einen Sender 8a und 8b und einen Empfänger 7a und 7b auf, die zur Signalübertragung herangezogen werden. Dabei erfolgt ein Datenstrom vom Sender 8b des Peripheriegeräts 2 über die Übertragungsstrecke 9a an den Empfänger 7a des Host-Bus-Adapters 3 im Computersystem 1. Umgekehrt erfolgt ein weiterer Datenstrom in anderer Richtung vom Sender 8a des Host-Bus-Adapters 3 über die Übertragungsstrecke 9b an den Empfänger 7b des Peripheriegeräts 2. Die jeweiligen Übertragungsrichtungen der Übertragungsstrecken 9a und 9b sind durch Pfeile gekennzeichnet. Die beiden Sender 8a und 8b sind schraffiert dargestellt. Die Sender 8a und 8b sowie die Empfänger 7a und 7b der beiden Geräte 1 und 2 sind PHY-Bausteine, also elektronische Schaltkreise oder integrierte Bausteine zur Signalübertragung zwischen den beiden Geräten 1 und 2.

Die Übertragungsstrecken 9a und 9b sind aus mehreren Teilabschnitten 10a bis 10d bzw. 11a bis 11d aufgebaut. So ergeben sich Teilabschnitte 10a, 10d und 11a, 11d auf Leiterbahnen von Platinen im Host-Bus-Adapter 3 und im Peripheriegerät 2, Teilabschnitte 10c und 11c auf Leiterbahnen der Backplane 5 sowie Teilabschnitte 10b und 11b in den Leitungen der Kabel 4. Jeder dieser Teilabschnitte 10a bis 10d bzw. 11a bis 11d kann die Signalübertragung stören.

Ferner können Asymmetrien zwischen den differentiellen Signalleitungen + und - in den Teilabschnitten 10a bis 10d bzw. 11a bis 11d auftreten. Diese Asymmetrien oder Unausgeglichenheiten bewirken, dass die Signale an den Empfängern 7a oder 7b unausgeglichen und asymmetrisch sind, insbesondere bezogen auf die Amplitude, die Phase, die Frequenz, die Flankensteilheit oder eine Kombination dieser Effekte.

Sendet nun ein Sender 8a oder 8b ein analoges Signal über die Übertragungsstrecken 9a oder 9b an einen jeweiligen Empfänger 7a oder 7b, indem gemäß einem vorgegebenen Übertragungsprotokoll Spannungssignale auf die Leitungen der Übertragungsstrecken 9a oder 9b gelegt werden, so beeinflussen die einzelnen Teilabschnitte 10a bis 10d und 11a bis 11d der Übertragungsstrecken 9a oder 9b und insbesondere die Asymmetrien zwischen den beiden Signalleitungen + und - in den Teilabschnitten 10a bis 10d und 11a bis 11d die Signale. Diese werden auf ihrem Weg von einem Sender 8a oder 8b zum jeweiligen Empfänger 7a oder 7b in ihren Eigenschaften asymmetrisch verändert oder gestört. Diese Beeinflussung der Signale kann eine erhöhte Fehlerrate, eine geringere Übertragungsgeschwindigkeit oder Informationsverlust zur Folge haben.

Daher ist es wünschenswert, die Sender 8a und 8b optimal an die Übertragungsstrecken 9a und 9b anzupassen, sodass Eigenschaften der übertragenen Signale, beispielsweise die Anstiegszeit oder Abklingzeit einer Signalflanke, die Präemphase oder die Deemphase sowie der relative Auslösezeitpunkt entsprechend verändert und zur Signalübertragung optimiert werden.

Zunächst werden Signalwerte am Empfänger 7a oder 7b jeweils separat für beide Signalleitungen + und - erfasst. Die Messung der Signalwerte der Signale beider Signalleitungen + und - kann empfängerseitig mittels externen Messgeräten, beispielsweise mittels eines Oszilloskopes durchgeführt werden. Es ist jedoch auch denkbar, Signalwerte automatisiert direkt am Abtastpunkt (sampling point) der übertragenen Signale im Analog-Digital-Wandler des Empfängers 7a oder 7b abzugreifen. Eine weitere Möglichkeit besteht darin, Signalwerte innerhalb des Unit Intervalls (UI) zu erfassen.

Anschließend können die erfassten Signalwerte als Roh-Datensatz oder als verarbeitete Daten an das andere Gerät 1 oder 2 mit den passenden Sendern 8a oder 8b übermittelt werden. Eine Unausgeglichenheit zwischen den beiden Signalen der Signalleitungen + und - kann im anderen Gerät 1 oder 2 ausgewertet werden. Hierzu können verschiedene Berechnungen und Auswertemöglichkeiten der oben erläuterten Art herangezogen werden.

Alternativ wird zunächst die Unausgeglichenheit anhand der gemessenen Signalwerte im Empfänger 7a oder 7b des ersten Gerätes 1 oder 2 ausgewertet, wobei das Ergebnis dieser Auswertung anschließend an das zweite Gerät 1 oder 2 übermittelt wird.

Die Übermittlung der Daten und/oder Ergebnisse an das zweite Gerät 1 oder 2 wird vorzugsweise über von den Signalleitungen separate weitere Datenleitungen 18a oder 18b durchgeführt. Dies hat den Vorteil, dass eine Übermittlung zeitgleich zur Auswertung durchgeführt werden kann, ohne die eigentliche Übertragungsstrecke zu belasten und eine empfängerseitige Auswertung der Signalwerte zu erschweren.

Schließlich erfolgt eine Änderung eines oder mehrerer Parameter des Senders 8a oder 8b im zweiten Gerät 1 oder 2 für zumindest eine der beiden Signalleitungen + oder - in Abhängigkeit der ausgewerteten Unausgeglichenheit. Durch Ändern und Anpassen der Parameter können Einstellungen der Signale zumindest einer Signalleitung geändert werden. Das bedeutet, dass die Signale bewusst mit einer Asymmetrie beaufschlagt werden, sodass aufgrund der unausgeglichenen Übertragung entlang der Übertragungsstrecken 9a und 9b empfängerseitig symmetrische Signale vorliegen. Eine Asymmetrie der Übertragungsstrecken 9a und 9b wird somit durch eine bewusste und gewollte senderseitige Asymmetrie der Signale kompensiert.

Durch iterative Ausführung der obigen Schritte kann schließlich ein Optimum der Anpassung der Parameter im Sender 8a oder 8b erzielt werden. Ein Optimum bedeutet hier nicht unbedingt ein bestes Signal, sondern ein Signal, welches derart mit einer Asymmetrie behaftet ist, dass nach der Übertragung entlang der Übertragungsstrecken 9a und 9b empfängerseitig symmetrische Signale vorliegen, welche bestmöglich den gewünschten Anforderungen entsprechen. Anforderungen können beispielsweise gestellt sein an eine Reduktion der Bitfehlerwahrscheinlichkeit oder an eine verbesserte elektromagnetische Verträglichkeit der Übertragungsstrecken 9a und 9b oder an beides.

Es ist möglich, zunächst den Sender 8a des Host-Bus-Adapters 3 im Computersystem 1 gemäß dem vorgenannten Verfahren anzupassen und anschließend den Sender 8b des Peripheriegerätes 2 zu parametrisieren oder umgekehrt. Ferner ist denkbar, dass sich auch die jeweiligen Empfänger 7a und 7b in ihren Parametern an die jeweils übertragenen analogen Signale mit ihren jeweiligen Signaleigenschaften anpassen.

Weiterhin ist denkbar, das vorgenannte Verfahren durchzuführen, falls Eigenschaften der physikalischen Schnittstelle, wie beispielsweise eine veränderte Abschirmung oder eine veränderte Kabellänge vorliegen. Es ist jedoch auch möglich, das Verfahren regelmäßig periodisch zu vorbestimmten Zeitpunkten durchzuführen, beispielsweise nach Booten des Computersystems 1 und erstmaligem Ansprechen des Peripheriegeräts 2.

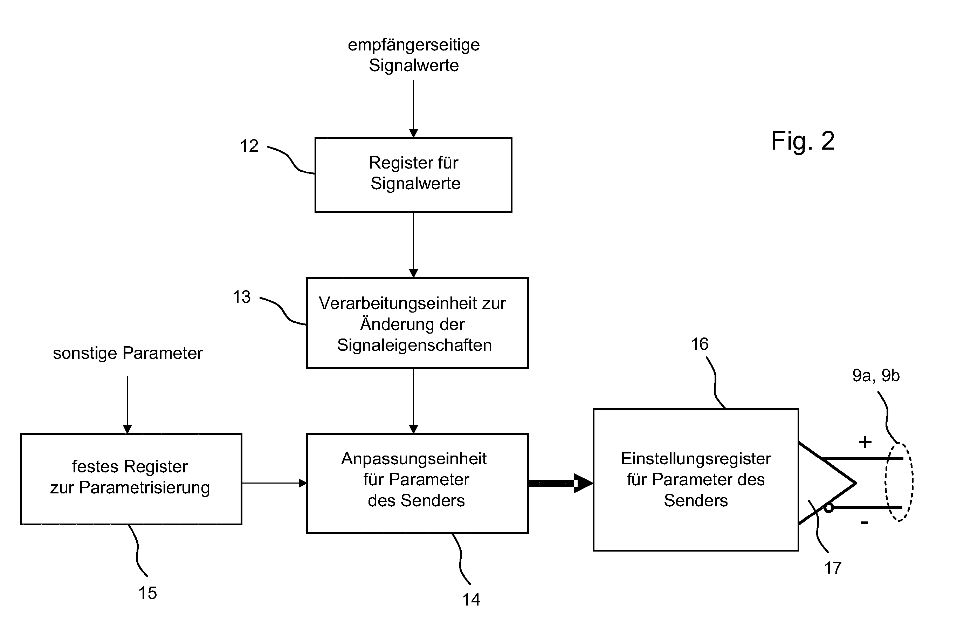

Figur 2 zeigt eine schematisierte Darstellung von Komponenten und ihrer logischen Verknüpfung zur Anpassung von Parametern eines Senders 8a oder 8b gemäß Figur 1. Signalwerte der beiden Signalleitungen + und -, welche an den Empfängern 7a oder 7b erfasst und gemessen wurden, werden zunächst in ein Register 12 abgelegt. Aus diesem Register 12 können die Signalwerte in eine Verarbeitungseinheit 13 zur Berechnung geänderter Signaleigenschaften geladen werden. Über vorbestimmte Algorithmen kann die Verarbeitungseinheit 13 schließlich aus den einzelnen Signalwerten eine Unausgeglichenheit oder Asymmetrie der empfängerseitigen Signale an den Signalleitungen + und - berechnen. Aus dieser Unausgeglichenheit errechnet die Verarbeitungseinheit 13 weiterhin geänderte Einstellungen für Signale auf zumindest einer der Signalleitungen + und -.

Diese Einstellungen werden schließlich einer Anpassungseinheit 14 übergeben, die unter Zuhilfenahme sonstiger Parameter aus einem weiteren Register 15 die Parameter des Senders verändert. Sonstige Parameter aus dem weiteren Register 15 können beispielsweise weitere Informationen gemäß dem verwendeten Übertragungsprotokoll oder beispielsweise Parameter zum Anpassen eines jeweiligen Empfängers 7a oder 7b an den entsprechenden Sender 8a oder 8b gemäß Figur 1 sein oder sich aus externen Messungen ergeben.

Die neu berechneten und veränderten Parameter des Senders werden einem Einstellungsregister 16 übergeben, welches direkt an den Sender-PHY-Baustein 17 gekoppelt ist. Das bedeutet, dass die neu eingestellten Parameter des Senders bei der nächsten Signalübertragung unmittelbar zur Verfügung stehen. Eine Signalübertragung auf den Übertragungsstrecken 9a oder 9b erfolgt in Figur 2 auf zwei differentiellen Leitungen einer jeweiligen Übertragungsstrecke 9a oder 9b, welche durch + und - gekennzeichnet sind. Ein analoges Signal eines Senders 8a oder 8b gemäß Figur 1, der gemäß Figur 2 entsprechend parametrisiert wurde, wird daher auf der Leitung + unverändert und auf der Leitung - invertiert übertragen. Die beiden Leitungen + und - gemäß Figur 2 bilden schließlich eine Übertragungsstrecke 9a oder 9b.

Eine Anpassung der Parameter eines Senders über einzelne Verarbeitungsschritte in mehreren Registern 12, 13, 15 sowie in den Logikeinheiten 14 und 16 kann direkt in einem Sender 8a oder 8b oder aber auch in separaten Logikeinheiten im Computersystem 1 oder im Peripheriegerät 2 gemäß Figur 1 implementiert sein.

In nicht dargestellten Ausführungsformen kann die physikalische Schnittstelle zwischen einem Computersystem 1 und einem Peripheriegerät 2 auch aus einem bidirektionalen Übertragungsweg gebildet sein. Dabei können die Sender 8a und 8b sowie die Empfänger 7a und 7b jeweils parallel zu der einzigen Übertragungsstrecke geschaltet sein, sodass analoge Signale über diese Übertragungsstrecke entweder vom Computersystem 1 zum Peripheriegerät 2 oder vom Peripheriegerät 2 zum Computersystem 1 übertragen werden. Eine solche Konfiguration ist beispielsweise aus dem USB-Standard bekannt.

### Bezugszeichenliste

- 1: Computersystem
- 2: Peripheriegerät
- 3: Host-Bus-Adapter
- 4: Kabel
- 5: Backplane
- 6: Stecker
- 7a, 7b: Empfänger
- 8a, 8b: Sender
- 9a, 9b: Übertragungsstrecke
- 10a, 10b, 10c, 10d: Teilabschnitte der Übertragungsstrecke 9a
- 11a, 11b, 11c, 11d: Teilabschnitte der Übertragungsstrecke 9b
- 12: Register für Signalwerte
- 13: Verarbeitungseinheit
- 14: Anpassungseinheit
- 15: weiteres Register
- 16: Einstellungsregister
- 17: Sender-PHY
- 18a, 18b: zusätzliche Datenleitung
- +, -: differentielle Signalleitung

## Patentansprüche

1. Verfahren zum Anpassen der Signalübertragung zwischen zwei elektronischen Geräten (1, 2), welche über eine physikalische Schnittstelle miteinander verbunden sind und jeweils einen Sender (8a, 8b) und einen Empfänger (7a, 7b) aufweisen, wobei Signale vom Sender (8a, 8b) eines Gerätes (1, 2) entlang einer Übertragungsstrecke (9a, 9b) an den Empfänger (7a, 7b) des anderen Gerätes (1, 2) übertragen werden und wobei die Übertragungsstrecke (9a, 9b) zumindest zwei Signalleitungen (+, -) zur differentiellen Übertragung der Signale aufweist, umfassend die folgenden Schritte:
A) Erfassen von Signalwerten am Empfänger (7a, 7b) des ersten Gerätes (1, 2) jeweils separat für beide Signalleitungen (+, - ),
B) Auswerten einer Asymmetrie zwischen den Signalen beider Signalleitungen (+, -) am Empfänger (7a, 7b) des ersten Gerätes (1, 2) in Abhängigkeit von den erfassten Signalwerten, **gekennzeichnet durch**:
C) Ändern eines oder mehrerer Parameter des Senders (8a, 8b) im zweiten Gerät (1, 2) separat und individuell bezogen auf die einzelnen Signalleitungen (+, -),
wobei zumindest die Schritte A) und C) iterativ durchgeführt werden bis ein vorbestimmtes Abbruchkriterium erfüllt ist.

2. Verfahren nach Anspruch 1, wobei die Schritte A), B) und C) iterativ durchgeführt werden bis das vorbestimmte Abbruchkriterium erfüllt ist.

3. Verfahren nach Anspruch 1 oder 2, wobei das vorbestimmte Abbruchkriterium eine vorbestimmte Menge an Signalwerten, insbesondere eine bestimmte Größe eines Ergebnisraumes, oder das Erreichen einer vorbestimmten engen Umgebung um das Optimum einer Asymmetrie zwischen den Signalen beider Signalleitungen (+, -) herum ist.

4. Verfahren nach einem der Ansprüche 1 bis 3, wobei die Parameter des Senders (8a, 8b) im zweiten Gerät (1, 2) derart angepasst werden, dass Eigenschaften der Signale zumindest einer der beiden Signalleitungen (+, -) durch den Sender (8a, 8b) im zweiten Gerät (1, 2) verändert werden, sodass die Asymmetrie zwischen den Signalen beider Signalleitungen (+, -) am Empfänger (7a, 7b) reduziert werden kann.

5. Verfahren nach Anspruch 4, wobei die Eigenschaften der Signale zumindest umfassen:
- Signalamplitude,
- Flankensteilheit,
- Präemphase,
- Auslösezeitpunkt und
- Phasenverschiebung.

6. Verfahren nach einem der Ansprüche 1 bis 5, wobei das Verfahren automatisiert durchgeführt wird.

7. Verfahren nach einem der Ansprüche 1 bis 6, wobei die erfassten Signalwerte an das zweite Gerät (1, 2) übermittelt werden und die Asymmetrie im zweiten Gerät (1, 2) ausgewertet wird.

8. Verfahren nach einem der Ansprüche 1 bis 6, wobei die Asymmetrie im Empfänger (7a, 7b) des ersten Gerätes (1, 2) ausgewertet wird und das Ergebnis der Auswertung an das zweite Gerät (1, 2) übermittelt wird.

9. Verfahren nach Anspruch 7 oder 8, wobei die Übermittlung an das zweite Gerät (1, 2) über eine von den Signalleitungen (+, -) separate weitere Datenleitung (18a, 18b) durchgeführt wird.

10. Verfahren nach einem der Ansprüche 1 bis 9, wobei eine Verarbeitungseinheit (13) im zweiten Gerät (1, 2) die Asymmetrie erfasst und geänderte Eigenschaften der Signale festlegt.

11. Verfahren nach Anspruch 10, wobei eine Anpassungseinheit (14) im zweiten Gerät (1, 2) die festgelegten Eigenschaften der Signale aus der Verarbeitungseinheit (13) abfragt und geänderte Parameter des Senders (8a, 8b) im zweiten Gerät (1, 2) berechnet.

12. Verfahren nach Anspruch 11, wobei die berechneten Parameter in einem Einstellungsregister (16) im zweiten Gerät (1, 2) abgelegt werden und der Sender (8a, 8b) über die Parameter aus dem Einstellungsregister (16) zur Signalübertragung angepasst wird.

13. Anordnung mit einem Computersystem (1) und einem Peripheriegerät (2), wobei das Peripheriegerät (2) über eine physikalische Schnittstelle an das Computersystem (1) angeschlossen ist und wobei das Computersystem (1) und das Peripheriegerät (2) jeweils einen Sender (8a, 8b) und einen Empfänger (7a, 7b) zur Signalübertragung zwischen dem Computersystem (1) und dem Peripheriegerät (2) aufweisen,
**dadurch gekennzeichnet, dass**
die Anordnung dazu eingerichtet ist, dass die Sender (8a, 8b) des Computersystems (1) und des Peripheriegerätes (2) durch ein Verfahren gemäß den Ansprüchen 1 bis 12 angepasst werden.

14. Anordnung nach Anspruch 13,
**dadurch gekennzeichnet, dass** das Computersystem (1) einen Host-Bus-Adapter (3) aufweist, mit dem das Peripheriegerät (2) verbunden ist.

15. Anordnung nach Anspruch 13 oder 14,
**dadurch gekennzeichnet, dass** die physikalische Schnittstelle gemäß einem der folgenden Standards ausgeführt ist:
- SCSI,
- SAS,
- SATA,
- Fibre Channel,
- USB.

## Claims

1. Method for matching the signal transmission between two electronic devices (1, 2) which are connected to one another by means of a physical interface and each have a transmitter (8a, 8b) and a receiver (7a, 7b), wherein signals are transmitted from the transmitter (8a, 8b) of one device (1, 2) along a transmission link (9a, 9b) to the receiver (7a, 7b) of the other device (1, 2) and wherein the transmission link (9a, 9b) has at least two signal lines (+, -) for differential transmission of the signals, comprising the following steps:
A) Detection of signal values on the receiver (7a, 7b) of the first device (1, 2) separately for each of the two signal lines (+, -),
B) Evaluation of an asymmetry between the signals from the two signal lines (+, -) on the receiver (7a, 7b) of the first device (1, 2) on the basis of the detected signal values, **characterized by**:
C) Changing of one or more parameters of the transmitter (8a, 8b) in the second device (1, 2) separately and individually with regard to the individual signal lines (+, - ),
wherein at least steps A) and C) are performed iteratively until a predetermined termination criterion is satisfied.

2. Method according to Claim 1, wherein steps A), B) and C) are performed iteratively until the predetermined termination criterion is satisfied.

3. Method according to Claim 1 or 2, wherein the predetermined termination criterion is a predetermined quantity of signal values, particularly a determined magnitude of a result space, or the reaching of a predetermined close environment around the optimum for an asymmetry between the signals from the two signal lines (+,-).

4. Method according to one of Claims 1 to 3, wherein the parameters of the transmitter (8a, 8b) in the second device (1, 2) are matched such that properties of the signals from at least one of the two signal lines (+, -) are altered by the transmitter (8a, 8b) in the second device (1, 2), as a result of which the asymmetry between the signals from the two signal lines (+, -) can be reduced on the receiver (7a, 7b).

5. Method according to Claim 4, wherein the properties of the signals comprise at least:
- signal amplitude,
- edge steepness,
- pre-emphasis,
- initiation time and
- phase shift.

6. Method according to one of Claims 1 to 5, wherein the method is performed in automated fashion.

7. Method according to one of Claims 1 to 6, wherein the detected signal values are transmitted to the second device (1, 2) and the asymmetry is evaluated in the second device (1, 2).

8. Method according to one of Claims 1 to 6, wherein the asymmetry is evaluated in the receiver (7a, 7b) of the first device (1, 2) and the result of the evaluation is transmitted to the second device (1, 2).

9. Method according to Claim 7 or 8, wherein the transmission to the second device (1, 2) is performed via a further data line (18a, 18b), which is separate from the signal lines (+, -).

10. Method according to one of Claims 1 to 9, wherein a processing unit (13) in the second device (1, 2) detects the asymmetry and stipulates changed properties of the signals.

11. Method according to Claim 10, wherein a matching unit (14) in the second device (1, 2) requests the stipulated properties of the signals from the processing unit (13) and calculates changed parameters of the transmitter (8a, 8b) in the second device (1, 2).

12. Method according to Claim 11, wherein the calculated parameters are stored in a settings register (16) in the second device (1, 2), and the transmitter (8a, 8b) is matched for the purpose of signal transmission by using the parameters from the settings register (16).

13. Arrangement having a computer system (1) and a peripheral device (2), wherein the peripheral device (2) is connected to the computer system (1) by means of a physical interface and wherein the computer system (1) and the peripheral device (2) each have a transmitter (8a, 8b) and a receiver (7a, 7b) for signal transmission between the computer system (1) and the peripheral device (2), **characterized in that**
the arrangement is set up such that the transmitters (8a, 8b) of the computer system (1) and of the peripheral device (2) are matched by a method according to claims 1 to 12.

14. Arrangement according to Claim 13,
**characterized in that** the computer system (1) has a host bus adapter (3) to which the peripheral device (2) is connected.

15. Arrangement according to Claim 13 or 14,
**characterized in that** the physical interface is designed on the basis of one of the following standards:
- SCSI,
- SAS,
- SATA,
- Fiber Channel,
- USB.

## Revendications

1. Procédé d'adaptation de la transmission de signaux entre deux appareils électroniques (1, 2), lesquels sont reliés l'un à l'autre par le biais d'une interface physique et possèdent respectivement un émetteur (8a, 8b) et un récepteur (7a, 7b), les signaux de l'émetteur (8a, 8b) d'un appareil (1, 2) étant transmis le long d'un trajet de transmission (9a, 9b) au récepteur (7a, 7b) de l'autre appareil (1, 2) et le trajet de transmission (9a, 9b) possédant au moins deux lignes de signal (+, -) destinées à la transmission différentielle des signaux, comprenant les étapes suivantes :
A) acquisition de valeurs de signal au niveau du récepteur (7a, 7b) du premier appareil (1, 2) respectivement séparément pour les deux lignes de signal (+, -),
B) interprétation d'une asymétrie entre les signaux des deux lignes de signal (+, -) au niveau du récepteur (7a, 7b) du premier appareil (1, 2) en fonction des valeurs de signal acquises,
**caractérisé par** :
C) modification d'un ou plusieurs paramètres de l'émetteur (8a, 8b) dans le deuxième appareil (1, 2) séparément et individuellement en référence aux lignes de signal (+, -) individuelles,
au moins les étapes A) et C) étant exécutées de manière itérative jusqu'à ce qu'un critère d'interruption prédéfini soit rempli.

2. Procédé selon la revendication 1, selon lequel les étapes A), B) et C) sont exécutées de manière itérative jusqu'à ce que le critère d'interruption prédéfini soit rempli.

3. Procédé selon la revendication 1 ou 2, selon lequel le critère d'interruption prédéfini est une quantité prédéfinie de valeurs de signal, notamment une taille donnée d'un espace de résultats, ou l'atteinte d'un entourage étroit prédéfini autour de l'optimum d'une asymétrie entre les signaux des deux lignes de signal (+, -).

4. Procédé selon l'une des revendications 1 à 3, selon lequel les paramètres de l'émetteur (8a, 8b) dans le deuxième appareil (1, 2) sont adaptés de telle sorte que les propriétés des signaux d'au moins l'une des deux lignes de signal (+, -) sont modifiées par l'émetteur (8a, 8b) dans le deuxième appareil (1, 2), de sorte que l'asymétrie entre les signaux des deux lignes de signal (+, -) au niveau du récepteur (7a, 7b) puisse être réduite.

5. Procédé selon la revendication 4, selon lequel les propriétés des signaux comprennent au moins :
- amplitude du signal,
- pente des flancs,
- préaccentuation,
- instant de déclenchement et
- déphasage.

6. Procédé selon l'une des revendications 1 à 5, selon lequel le procédé est mis en oeuvre de manière automatisée.

7. Procédé selon l'une des revendications 1 à 6, selon lequel les valeurs de signal acquises sont communiquées au deuxième appareil (1, 2) et l'asymétrie est interprétée dans le deuxième appareil (1, 2).

8. Procédé selon l'une des revendications 1 à 6, selon lequel l'asymétrie est interprétée dans le récepteur (7a, 7b) du premier appareil (1, 2) et le résultat de l'interprétation est communiqué au deuxième appareil (1, 2).

9. Procédé selon la revendication 7 ou 8, selon lequel la communication au deuxième appareil (1, 2) est réalisée par le biais d'une ligne de données (18a, 18b) supplémentaire distincte des lignes de signal (+, -).

10. Procédé selon l'une des revendications 1 à 9, selon lequel une unité de traitement (13) dans le deuxième appareil (1, 2) détecte l'asymétrie et définit les propriétés modifiées des signaux.

11. Procédé selon la revendication 10, selon lequel une unité d'adaptation (14) dans le deuxième appareil (1, 2) interroge les propriétés définies des signaux issues de l'unité de traitement (13) et calcule les paramètres modifiés de l'émetteur (8a, 8b) dans le deuxième appareil (1, 2).

12. Procédé selon la revendication 11, selon lequel les paramètres calculés sont stockés dans un registre de réglage (16) dans le deuxième appareil (1, 2) et l'émetteur (8a, 8b) est adapté en vue de la transmission des signaux par le biais des paramètres issus du registre de réglage (16).

13. Arrangement comprenant un système informatique (1) et un appareil périphérique (2), l'appareil périphérique (2) étant raccordé au système informatique (1) par le biais d'une interface physique et le système informatique (1) ainsi que l'appareil périphérique (2) possédant respectivement un émetteur (8a, 8b) et un récepteur (7a, 7b) destinés à la transmission de signaux entre le système informatique (1) et l'appareil périphérique (2), **caractérisé en ce que** l'arrangement est conçu pour que les émetteurs (8a, 8b) du système informatique (1) et de l'appareil périphérique (2) soient adaptés par le biais d'un procédé selon les revendications 1 à 12.

14. Arrangement selon la revendication 13, **caractérisé en ce que** le système informatique (1) possède un adaptateur de bus hôte (3) auquel est raccordé l'appareil périphérique (2).

15. Arrangement selon la revendication 13 ou 14, **caractérisé en ce que** l'interface physique est réalisée conformément à l'une des normes suivantes :
- SCSI,
- SAS,
- SATA,
- Fibre Channel,
- USB.
